# FASCICULE DE BREVET EUROPEEN

(11) **EP 4 339 043 B1**
(45) Date de publication et mention de la délivrance du brevet: **30.09.2026**
(21) Numéro de dépôt: 23207995.4
(22) Date de dépôt: 08.11.2019
(51) Int. Cl.: B60T 8/174

(54) **PROCÉDÉ DE FABRICATION D'UN SYSTÈME DE FREINAGE D'UN VÉHICULE AYANT RECOURS À DE LA LOGIQUE FLOUE**
VERFAHREN ZUR HERSTELLUNG EINES BREMSSYSTEMS EINES FAHRZEUGS UNTER VERWENDUNG VON FUZZY-LOGIK
METHOD FOR MANUFACTURING A BRAKING SYSTEM OF A VEHICLE MAKING USE OF FUZZY LOGIC

(30) Priorité: 12.11.2018 FR 1860438
(43) Date de publication de la demande: 20.03.2024
(62) Numéro(s) de document de la (des) demande(s) initiale(s) en application de l'article 76 CBE: 19820839.9 / 3 853 087
(73) Titulaire: Hitachi Astemo France, 93700 Drancy (FR)
(72) Inventeur: HURWIC, Aleksander, 75020 PARIS (FR)
(74) Mandataire: Santarelli

(56) Documents cités:
- EP-A1- 1 876 077
- EP-A1- 2 045 155
- WO-A1-2017/175108
- WO-A2-2018/182554
- GB-A- 2 471 940
- US-A1- 2012 280 562

## Description

La présente invention se rapporte à un procédé de fabrication d'un système de freinage d'un véhicule ayant recours à de la logique floue.

Les systèmes de freinage considérés ici comprennent une partie mécanique, responsable du freinage physique, et une partie de commande contenant des consignes ou codes de freinage, qu'on peut souvent représenter par des fonctions de pression du liquide de freinage ou de décélération d'un moteur électrique en fonction du temps. Ces consignes sont appliquées par un calculateur, lui aussi embarqué sur le véhicule. L'application de la consigne de freinage choisie en fonction des circonstances du freinage se fait en temps réel. Les consignes sont enregistrées dans une mémoire du calculateur, qui peut être dédié au système de freinage ou au contraire servir aussi à d'autres fonctions, tel qu'un calculateur ESP (marque déposée), qui s'occupe de modulations des commandes de trajectoire, ou un calculateur sur le bus CAN du véhicule (pompe, amplificateur de freinage, générateur électrique de pression, etc.), entre autres exemples.

Le frein peut être de tout genre, y compris un frein de stationnement, qu'on peut utiliser sur route pour un freinage de secours ; et de toute nature (mécanique à disque ou tambour et pression de fluide, ou électrochimique à récupération d'énergie électrique par une batterie, le freinage revenant alors à une décélération imposée à un moteur électrique). Et le véhicule peut lui aussi être de tout genre (notamment à moteur à combustion interne, électrique, ou hybride).

L'invention a été conçue pour améliorer les consignes de freinage obtenues par les procédés habituels et obtenir des freinages plus efficaces selon les circonstances effectivement rencontrées, en s'efforçant de prendre en compte de façon appropriée autant des très nombreux paramètres qui participent au freinage que possible, mais dont l'influence peut être difficile à évaluer.

L'invention définie par les revendications indépendantes 1 et 6 se distingue des procédés tels que ceux qui sont décrits dans EP 2045155 A1 ou EP 1876077 A1, où des consignes de freinage sont élaborées en utilisant de la logique floue, en fonction de divers paramètres associés au véhicule, à son mouvement ou éventuellement son environnement, mais en temps réel, c'est-à-dire pendant un freinage effectif, et ces consignes sont appliquées immédiatement.

Toutefois, hors de cas très simples, les processus de formation des résultats en logique floue échappent à l'observateur et la qualité de leurs résultats ne peut pas être garantie, ce qui est pourtant indispensable dans cette application où la sécurité est primordiale ; les consignes issues de la logique floue ne sont donc pas fiables en elles-mêmes. Dans les documents ci-dessus, il est prévu que la consigne peut être modifiée à tout instant en fonction des résultats de freinage. On désirerait pourtant disposer de consignes de freinage éprouvées, sans risquer de devoir s'imposer une correction pendant le processus même d'un freinage.

Le procédé de fabrication du système de freinage de l'invention, qui fait pourtant appel à la logique floue pour l'élaboration de consignes de freinage immuables dans un calculateur de commande du frein, comprend alors trois étapes principales :
- génération de consignes de freinage candidates sur un dispositif équipé d'un processeur de logique floue en fonction d'un premier jeu de paramètres de situations de freinage ;
- validation ou rejet des consignes de freinage candidates en appliquant au moins un algorithme de décision par un dispositif de calcul algorithmique ;
- implantation des consignes de freinage candidates qui ont été validées sur le calculateur de la partie de commande.

L'étape de validation complète donc l'étape préliminaire de génération des consignes en apportant la sécurité d'un algorithme de décision parfaitement maîtrisé par le concepteur. Les validations pourront consister en des vérifications de normes ou d'exigences réglementaires de sécurité par exemple, ou se fonder sur des simulations de situations de freinage en faisant appel éventuellement à un second jeu de paramètres, pouvant comprendre des paramètres déjà présents dans le premier jeu. Elles seraient souvent impossibles à accomplir en temps réel si les paramètres de validation ne sont pas modélisables ou si les paramètres du second jeu ne sont pas mesurés dans le véhicule.

Le processeur de logique floue peut avantageusement comporter un réseau de neurones.

Un avantage de la logique floue est qu'elle se prête bien à des techniques d'auto-apprentissage, qui pourront être utilisées ici selon les résultats de validation ou de rejet des consignes candidates obtenues à la deuxième étape.

Selon divers modes de réalisation possibles de l'invention, le premier jeu de paramètres peut comprendre tout ou partie des paramètres suivants : de modèles du véhicule ou du système de freinage ; de mouvements du véhicule ; d'environnement extérieur du véhicule ; d'état de divers constituants du véhicule hors du système de freinage ; d'historique de conduite ou de freinage ; de commande de freinage ou de style de conduite ; ou d'allocation ou de répartition de ressources énergétiques entre le système de freinage et d'autres systèmes du véhicule, quand ils sont en compétition pour elles.

L'algorithme de décision comprend par exemple une vérification, de nature analytique, d'exigences réglementaires, techniques et/ou associées à un conducteur.

Si l'algorithme de décision comprend une analyse de résultats d'application des consignes candidates à des simulation de situations de freinage exprimées par le second jeu de paramètres, il est souvent avantageux de répéter la validation avec des variations successives des paramètres du second jeu dans des plages de simulations, afin d'accroître la sûreté de validation et de les rendre mieux exhaustives des différentes situations plausibles de freinage.

L'algorithme de décision peut aussi comprendre des détections de problèmes et/ou valeurs de mesure de capteurs apparaissant sur le véhicule hors du système de freinage après avoir appliqué les consignes candidates.

Il peut encore comprendre une étape d'auto-apprentissage, consistant en des réévaluations de consignes précédemment validées, en cas de rejet d'une consigne candidate jugée comme similaire auxdites consignes précédemment validées. La comparaison/classification des exemples de situation de freinage s'effectue de préférence par un réseau neuronal, de préférence comportant au moins trois couches de neurones et de manière encore préférée comportant un nombre de couches élevé (deep learning en terminologie anglo-saxonne).

Selon un aspect particulier de l'invention, les étapes principales du procédé sont :
- génération en laboratoire de consignes de freinage candidates sur un dispositif, simulateur de freinage ou calculateur, équipé d'un processeur de logique floue en fonction d'un premier jeu de paramètres de situations de freinage ;
- validation ou rejet des consignes de freinage candidates en appliquant au moins un algorithme de décision par un dispositif de calcul algorithmique, l'algorithme de décision comprenant une vérification analytique d'exigences réglementaires, techniques et/ou associées à un conducteur, et/ou une analyse de résultats d'application des consignes candidates à des simulations de situations de freinage exprimées par un second jeu de paramètres ;
- les consignes de freinage inscrites dans ladite mémoire du calculateur de la partie de commande étant les consignes de freinage candidates qui ont été validées.

Un autre aspect de l'invention est un véhicule comprenant un système de freinage fabriqué selon ce qui précède.

Les différents aspects, caractéristiques et avantages de l'invention seront maintenant décrits plus en détail en s'appuyant sur les figures suivantes, données à titre purement illustratif pour décrire certaines réalisations ou variantes de réalisations possibles de celle-là :
- la figure 1 représente le procédé de fabrication du système de freinage ;
- la figure 2 illustre un réseau de neurones ;
- les figures 3, 4, 5, 6 et 7 illustrent certains algorithmes de validation des consignes candidates ;
- et la figure 8 représente le dispositif utilisé et les interactions entre ses constituants.

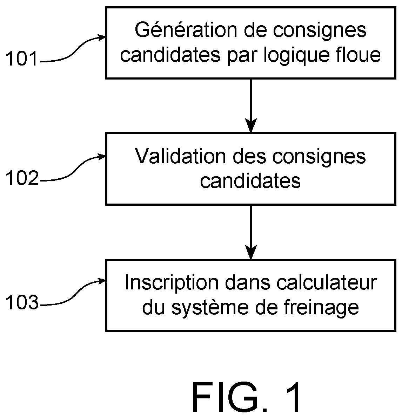

Le procédé conforme à l'invention comprend trois étapes principales représentées à la figure 1.

La première étape 101 est une génération de consignes ou de codes de freinage au moyen d'un algorithme de logique floue.

La deuxième étape 102 est une étape de validation des consignes produites par la première étape 101 et dites consignes candidates.

La troisième étape 103 est une implantation des consignes validées à la deuxième étape 102 sur un calculateur de véhicule, chargé de commander le système de freinage.

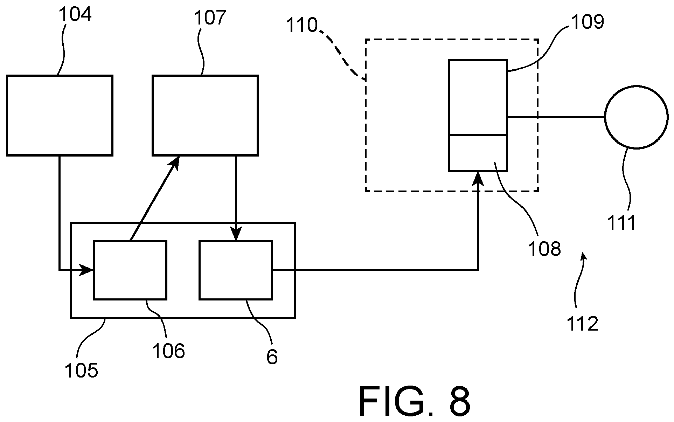

D'après la figure 8, la première étape 101 est accomplie sur un dispositif 104 de calculateur équipé d'un processeur permettant d'accomplir des opérations en logique floue. Ses résultats sont transmis à un dispositif de stockage 105 contenant une base de données 106 de consignes candidates et une base de données 6 de consignes validées, et ils sont inscrits comme consignes candidates dans la première de ces bases de données.

Le dispositif de stockage est ensuite apporté à un dispositif 107, éventuellement distinct du précédent, qui effectue des calculs algorithmiques de validation des consignes candidates et les transcrit dans la base de données 6 après les avoir validées. L'opérateur pourra alors inscrire le contenu de la base de données 6 dans une mémoire 108 d'un calculateur 109 d'une partie de commande 110 d'un système de freinage 112, comprenant encore une partie mécanique 111 régie par la partie de commande 110. Le système de freinage et le frein lui-même seront ensuite montés sur un véhicule.

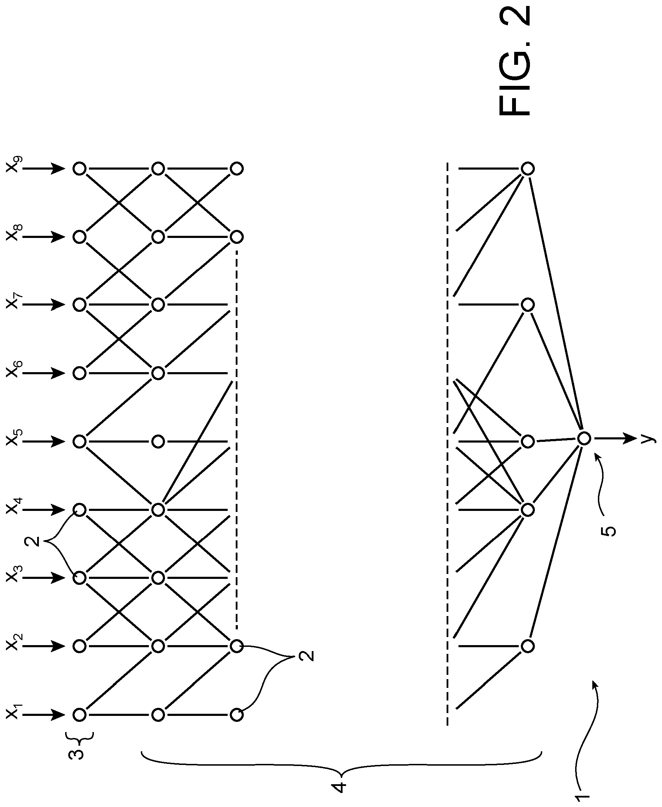

La première étape 101 est menée en laboratoire ou en usine sur un simulateur de freinage ou un simple calculateur équipé d'un réseau 1 de neurones 2 qu'on décrira succinctement au moyen de la figure 2. Des paramètres d'un premier jeu, prenant des valeurs notées xᵢ, sont fournis à des neurones 2 d'une couche d'entrée 3 du réseau 1. Les neurones 2 sont, d'une manière générale, des processeurs logiques aptes à traiter les signaux d'entrée qu'ils reçoivent et à transmettre des signaux de sortie correspondant aux processus logiques à d'autres neurones 2, appartenant en principe à des couches suivantes du réseau 1, dite couches intermédiaires 4, et qui combinent les signaux de sortie des neurones 2 des couches précédentes de diverses manières. De manière typique, mais non limitative, les processus faits par les neurones 2 de la couche d'entrée 3 peuvent comprendre des pondérations par des coefficients numériques ou des discriminations d'après des valeurs de seuil, et les combinaisons peuvent comprendre des opérations logiques (ET, OU, etc.), des combinaisons numériques, ou autres. Les réseaux 1 de neurones peuvent comporter autant de couches intermédiaires 4 de neurones 2 que nécessaire, qui combinent les signaux de sortie des couches précédentes suivant le même principe, par exemple entre 3 et 1 000 couches, de préférence entre 30 et 100 couches, par exemple 80 couches. Le nombre de couches dépend de la puissance de calcul disponible et de la complexité des données à traiter. Ils comprennent une couche de sortie 5, pouvant comprendre ici un seul neurone 2, dont le signal de sortie y correspond à la consigne de freinage candidate, c'est-à-dire une fonction de pression de fluide de freinage pour un système de freinage hydraulique, ou le courant de commande d'un moteur électrique pour un système de freinage électrique, ou plus généralement de force de freinage, à appliquer au frein en fonction du temps. En variante, la sortie comporte un nombre de neurones 2 égal ou sensiblement égal au nombre de bits du bus de commande (sortie) d'un calculateur du système de freinage sur lequel le logiciel de freinage doit être implémenté. Par exemple, la dernière couche de neurones 2 comprend alors 8, 16, 32, 64 ou 128 neurones.

Les paramètres du premiers jeu peuvent comprendre certaines au moins des indications :
- x₁ du modèle du véhicule (poids, dimensions, caractéristiques des roues, etc.)
- x₂ du modèle du frein ou de sa nature (sur roue avant ou arrière, frein de conduite normal ou frein de stationnement ; ce dernier est typiquement commandé à une intensité de freinage conventionnelle),
- x₃ de commande de freinage et notamment d'actionnement sur la pédale de frein (force, brusquerie, durée, etc.) ; ou d'actionnement du levier d'un frein de stationnement, pour faire participer celui-ci à un freinage d'urgence ou de secours, éventuellement,
- x₄ de mouvement du véhicule (vitesse sur route ou vitesse de rotation des roues, accélération, braquage du volant, angle de lacet, etc.),
- x₅ d'environnement extérieur (température, adhérence sur route, localisation du véhicule pour corriger une vitesse excessive, etc.) donnant des indications du milieu extérieur, du véhicule ou de leur interaction,
- x₆ de tout capteur d'état du véhicule, y compris du système de freinage (pression des pneus, niveau de liquide de frein, usure des freins, tension ou charge de la batterie, etc.),
- x₇ de répartition et de gestion des ressources d'énergie immédiatement disponibles pour commander le véhicule, pour éventuellement les modifier au profit du processus de freinage ; ce dernier aura en effet priorité sur d'autres systèmes, comme l'amortissement, pour l'allocation de pression d'huile ; un autre cas important est celui des véhicules électriques ou hybrides à freinage régénératif, où le freinage doit être adapté au moteur électrique ou à l'alternateur utilisé pour décélérer,
- x₈ d'historique de conduite ou de freinage pour tenir compte d'événements passés (freinages immédiatement précédents ou autres paramètres de conduite qui peuvent donner une indication sur l'état de la route ou nécessiter une application d'anti-blocage (ABS) par exemple, et aussi permettre d'évaluer la température du frein ou celle de l'alternateur responsable de la décélération,
- x₉ de style de freinage ou de conduite (freinage fin, progressif ou brusque, caractéristiques du conducteur ou ses préférences pour une conduite confortable ou au contraire nerveuse, etc.). De même, les caractéristiques de freinage effectif particulièrement efficaces, de préférence classées, par exemple en freinage de confort, freinage d'urgence, ralentissement, arrêt, freinage d'urgence, sont présentées au réseau 1 de neurones pour bénéficier de ses capacités d'auto-apprentissage.

Tous les paramètres envisageables pourront être introduits dans le réseau 1 et pris en compte de diverses manières très différentes, ce qui justifie l'intérêt de ce processus. On pourra notamment recourir à tout capteur présent sur le véhicule et apte à fournir un signal au calculateur associé au freinage. Les couches intermédiaires 4 du réseau 1 façonnent peu à peu les consignes candidates y.

Les consignes pourront être obtenues soit pour les freins habituellement chargés du freinage, soit pour le frein de stationnement, pour lui faire assurer soit sa fonction normale comme les autres freins à vitesse importante du véhicule, soit le faire participer à un freinage de secours à faible vitesse du véhicule, qui indique une situation de stationnement et d'arrêt.

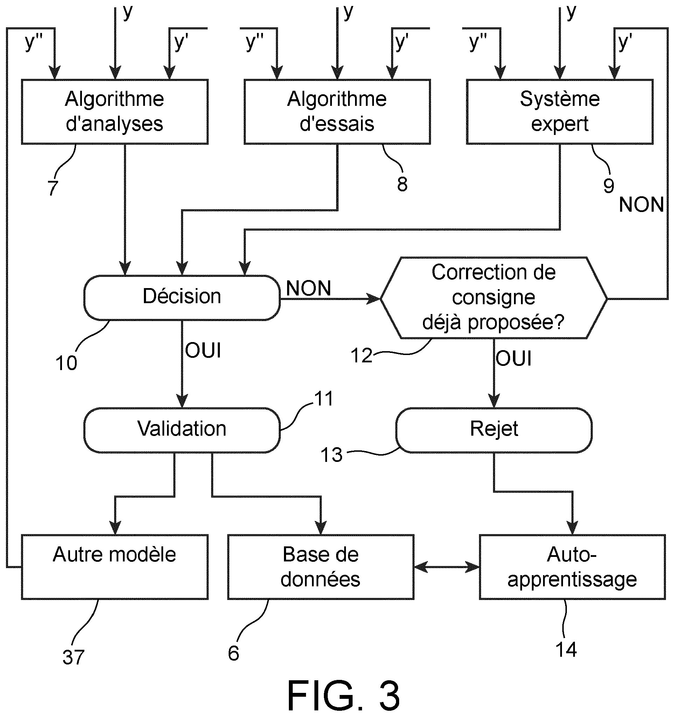

La deuxième étape 102 du procédé de la figure 1 est relative à la validation des consignes candidates obtenues d'après ce qui précède. Elle s'effectue aussi, comme la première étape 101, en usine ou en laboratoire. Chaque consigne candidate y obtenue précédemment peut être validée de plusieurs manières, qu'on peut d'ailleurs cumuler entre elles, ce qui est représenté à la figure 3. Les modes de validation sont de nature algorithmique et peuvent comprendre des algorithmes d'analyse 7, des algorithmes d'essai 8 et des algorithmes de système expert 9. Les résultats de ces différents algorithmes sont fournis à un module de décision 10 qui peut produire une décision de validation 11 (en principe si les résultats de tous les algorithmes sont favorables) ou au contraire une décision de rejet 13. Cette dernière peut toutefois être précédée d'une étape de tentative de correction 12 de la consigne candidate y, qu'on refait ensuite repasser sous forme de consigne corrigée y' au moins par les algorithmes 7, 8 et 9 où la consigne a échoué avant correction. En cas de nouvel échec par le module de décision 10, le rejet 13 est définitif.

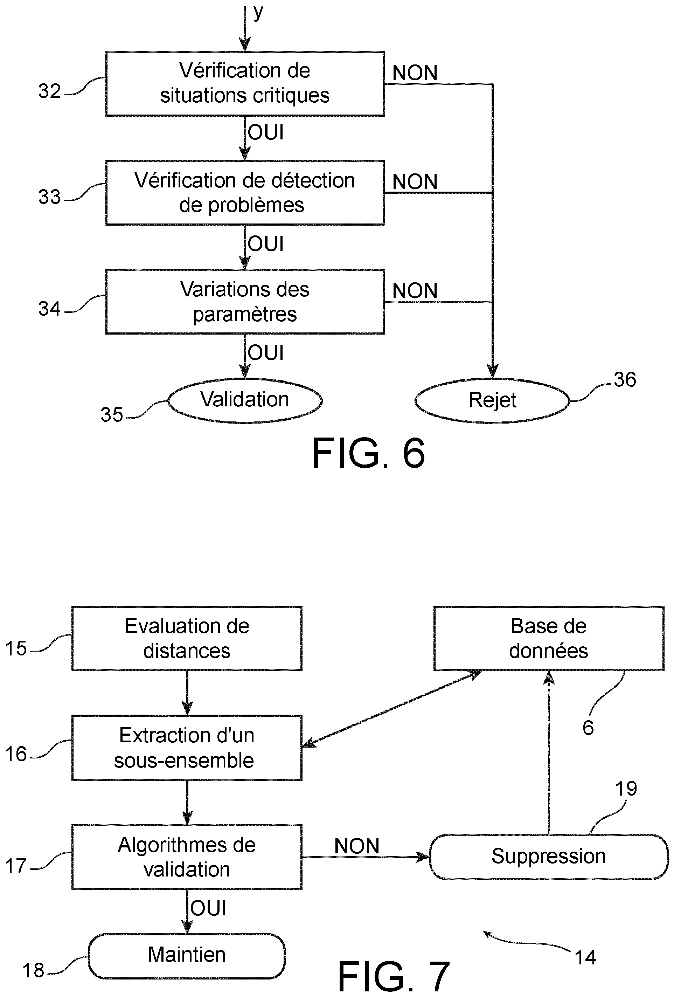

Il est à noter qu'un auto-apprentissage 14 peut également être pratiqué en cas de rejet. Il peut consister en les opérations résumées à la figure 7 : on recherche les consignes validées précédemment, et enregistrées dans une base de données 6, qui sont analogues à la consigne y qu'on vient de rejeter, par des calculs de similitude ou de distance mathématiques (étape 15) ; on extrait le cas échéant un sous-ensemble des consignes de la base de données 6 dont les similitudes avec la consigne rejetée sont suffisantes (étape 16) ; les consignes du sous-ensemble sont à nouveau soumises aux algorithmes de validation 7, 8 et 9 (étape 17) ; elles sont maintenues dans la base de données 6 en cas de renouvellement de la validation (étape 18) ou retirées de la base de données 6 sinon (étape 19).

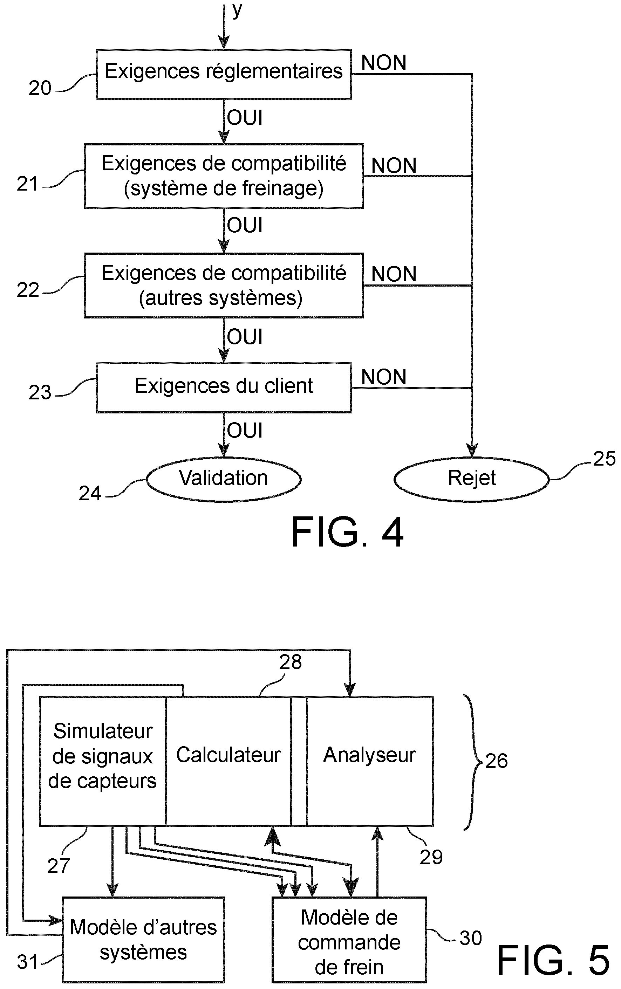

On passe au commentaire de la figure 4 pour détailler un algorithme d'analyse 7. La consigne candidate y est vérifiée successivement selon divers critères, comme des exigences réglementaires ou des normes (étape 20), des exigences techniques de compatibilité avec le système de freinage (étape 21) ou des exigences d'interaction avec les autres systèmes (allocation des ressources, etc.) (étape 22), et des exigences ou attentes des clients, sur le style de freinage souhaité par exemple (étape 23). Si la consigne candidate y traverse ces examens avec succès, elle est validée (étape 24), ou rejetée sinon (étape 25). Ces différentes exigences peuvent être vérifiées dans un ordre quelconque, étant indépendantes les unes des autres, et elles peuvent être complétées par d'autres vérifications.

Un algorithme d'essai 8 par simulation de situations de freinage peut appliquer la consigne candidate y à un modèle du système en même temps que des signaux représentatifs d'un second jeu de paramètres du véhicule ou de son environnement, qui caractérisent certaines situations de freinage jugées comme importantes. Le second jeu de paramètres peut comprendre ou non des paramètres déjà présents dans le premier jeu, utilisé dans l'étape précédente 101. Ces paramètres du second jeu peuvent encore être représentatifs de signaux de capteurs présents dans le véhicule, ou d'autres indications. On cherche à être exhaustif, c'est-à-dire à recréer toutes les situations plausibles ou possibles.

La description d'un algorithme à système expert 9 sera maintenant donnée au moyen de la figure 5. Le système expert 26 proprement dit comprend un simulateur de signaux de capteurs 27 du véhicule, un calculateur 28 et un analyseur 29, et il interagit avec un modèle de commande de frein 30 et des modèles d'autres systèmes 31 du véhicule, qui sont typiquement des systèmes interagissant avec le système de freinage. Le simulateur de signaux de capteurs 27 et le calculateur 28 fournissent leurs signaux de sortie au modèle de commande de frein 30 et au modèle d'autres systèmes 31. Et le modèle de commande de frein 30, qui est soit le dispositif physique lui-même, soit une simulation de ce dispositif sur un ordinateur, fournit des signaux représentatifs du freinage au calculateur 28 et à l'analyseur 29.

Le calculateur 28 peut transmettre notamment la consigne ou une succession de consignes candidates y au modèle de commande de frein 30 pour simuler une situation de freinage, qui est aussi définie par le simulateur de signaux de capteurs 27. Les résultats du modèle de commande de frein 30 fournis au calculateur 28 permettent d'ajuster la consigne de freinage et l'analyseur 29 vérifie que le freinage est satisfaisant. Le modèle des autres systèmes 31 indique si le freinage se déroule de façon satisfaisante pour ces derniers aussi.

Le procédé peut comprendre les étapes principales suivantes, représentées à la figure 6. On peut procéder d'abord à une vérification de situations critiques (étape 32), représentées par des valeurs particulières fournies par le simulateur de signaux de capteur 27 et le calculateur 28. Si l'analyseur 29 conclut que le freinage est satisfaisant, on peut alors procéder à une vérification de problèmes détectés par le modèle des autres systèmes 31, et qui peuvent être des excès de freinage menant à une surchauffe, ou une instabilité de trajectoire par exemple (étape 33). Enfin, une dernière vérification importante peut comprendre des variations de paramètres (étape 34), c'est-à-dire que le procédé est répété avec des valeurs différentes des signaux fournis par le simulateur 27 dans les plages de valeurs que ces signaux peuvent prendre. Le choix de ces valeurs différentes peut être aléatoire, ou guidé par des détections de problèmes potentiels par l'analyseur 29 ou le modèle 31. Si les vérifications sont toutes concluantes, une validation de la consigne candidate y est encore faite, sinon un rejet (étape 35 ou 36). Comme avec l'algorithme d'essais 8, on procède ici à des simulations de situations de freinage, mais avec une interactivité entre le calculateur et le modèle de commande du frein, et une mesure d'influence sur d'autres systèmes.

Cette deuxième étape 102 principale du procédé peut être rendue plus efficace en appliquant aussi les consignes candidates y à d'autres modèles de véhicule ou de système de freinage (étape 37 de la figure 3) une fois qu'elles sont validées. Les algorithmes 7, 8 et 9 seront recommencés pour ces autres modèles. Les consignes correspondantes, notées y"*,* pourront toutefois être identiques aux consignes y juste validées. Il est bien entendu que la mise en œuvre de validation/détection des erreurs dans les logiciels de freinage élaborés sans mise en œuvre de logique floue (écriture du programme par un opérateur humain, avantageusement utilisant un atelier logiciel) ou par une logique algorithmique par le système expert des figures 5 et/ou 6 ne sort pas du cadre de la présente invention.

La troisième étape 103 principale du procédé consiste en une inscription (« flash ») des consignes de freinage validées dans la mémoire du calculateur associée au système de freinage. Cette étape n'implique pas de difficulté particulière puisqu'elle ne diffère pas des inscriptions de consignes déjà pratiquées pour les systèmes de freinage à commande numérique (brake by wire en terminologie anglo-saxonne).

Quand le système de freinage a été équipé des consignes dûment validées, il peut être monté sur un véhicule.

On espère donc obtenir des freinages plus efficaces, grâce à la logique floue, qui permet de traiter un nombre presque illimité de paramètres d'entrée, et à l'auto-apprentissage, et tout aussi sûrs qu'avec des procédés actuels, grâce à la validation rigoureuse de la deuxième étape, en appliquant l'invention.

L'invention s'applique aux systèmes de freinage avec un conducteur humain ainsi qu'aux systèmes de freinage assisté par des détecteurs et calculateurs et aux systèmes de freinage des véhicules autonomes.

### NOMENCLATURE

- 1: Réseau de neurones
- 2: Neurone
- 3: Couche d'entrée
- 4: Couches intermédiaires
- 5: Couche de sortie
- 6: Base de données
- 7: Algorithme d'analyses
- 8: Algorithme d'essais
- 9: Système expert
- 10: Décision
- 11: Validation
- 12: Correction de consigne déjà proposée ?
- 13: Rejet
- 14: Auto-apprentissage
- 15: Evaluation de distance
- 16: Extraction d'un sous-ensemble
- 17: Algorithmes de validation
- 18: Maintien
- 19: Suppression
- 20: Exigences réglementaires
- 21: Exigences de compatibilité (système de freinage)
- 22: Exigences de comptabilité (autres systèmes)
- 23: Exigences du client
- 24: Validation
- 25: Rejet
- 26: Système expert
- 27: Simulateur de signaux
- 28: Calculateur
- 29: Analyseur
- 30: Modèle de commande de frein
- 31: Modèle d'autres systèmes
- 32: Vérification de situations critiques
- 33: Vérification de détection de problèmes
- 34: Variations des paramètres
- 35: Validation
- 36: Rejet
- 37: Autres modèles
- 101: Première étape
- 102: Deuxième étape
- 103: Troisième étape
- 104: Dispositif à processeur de logique floue
- 105: Dispositif de stockage
- 106: Base de données de consignes candidates
- 107: Dispositif de validation algorithmique
- 108: Mémoire
- 109: Calculateur
- 110: Partie de commande de frein
- 111: Partie mécanique de frein
- 112: Système de freinage
- x₁ à x₉: Paramètres d'entrée
- y, y', y": Consignes candidates

## Revendications

1. Procédé de validation ou rejet (102) de consignes de freinage candidates pendant la fabrication d'un système de freinage (112) pour un véhicule, **caractérisé en ce qu'**il comporte :
l'application d'au moins un algorithme parmi un algorithme d'analyse (7) comprenant une vérification d'exigences réglementaires (20), techniques (21, 22) et/ou associées à un conducteur (23), un algorithme d'essai (8) comprenant l'application des consignes candidates à des simulations de situations de freinage et un algorithme de système expert (9), le système expert (26) comportant un simulateur (27) de signaux de capteurs du véhicule, un calculateur (28) et un analyseur (29), le système expert (26) interagissant avec un modèle de commande de frein (30) et un modèle (31) d'autres systèmes du véhicule, dans lequel l'analyseur (29) vérifie que le freinage est satisfaisant en réalisant des étapes de :
- vérification (32) de situations critiques représentées par des valeurs particulières fournies par le simulateur de signaux de capteur (27) et le calculateur (28),
- vérification (33) de problèmes détectés par le modèle des autres systèmes (31), si l'analyseur (29) conclut que le freinage est satisfaisant à l'étape précédente,
- répétition (34) des étapes de vérification avec des valeurs différentes des signaux fournis par le simulateur (27),
- validation (35) d'une consigne candidate si les vérifications sont toutes concluantes, et rejet de la consigne candidate sinon (36).

2. Procédé de validation ou rejet (102) de consignes de freinage candidates selon la revendication 1, **caractérisé en ce que** l'étape de vérification (33) de problèmes détectés par le modèle (31) des autres systèmes comporte la prise en compte de phénomène choisi parmi un excès de freinage menant à une surchauffe, ou une instabilité de trajectoire.

3. Procédé de validation ou rejet (102) de consignes de freinage candidates selon la revendication 1 ou 2, **caractérisé en ce que** l'étape de répétition (34) des étapes de vérification est effectuée avec des valeurs différentes des signaux fournis par le simulateur (27), qui sont choisies aléatoirement.

4. Procédé de validation ou rejet (102) de consignes de freinage candidates selon l'une quelconque des revendications 1 ou 2, **caractérisé en ce que** l'étape de répétition (34) des étapes de vérification est effectuée avec des valeurs différentes des signaux fournis par le simulateur (27), qui sont choisies en fonction de détections de problèmes potentiels par l'analyseur (29) ou le modèle (31) d'autres systèmes du véhicule.

5. Procédé de validation ou rejet (102) de consignes de freinage candidates selon l'une quelconque des revendications 1 à 4, **caractérisé en ce que** l'étape de validation ou rejet (102) des consignes de freinage candidates comporte un auto-apprentissage (14) comportant des réévaluations de consignes précédemment validées, en cas de rejet d'une consigne candidate jugée comme similaire auxdites consignes précédemment validées.

6. Système de freinage comprenant une partie mécanique (111) et une partie de commande (110) dans laquelle un calculateur (109) applique en temps réel des consignes de freinage à la partie mécanique en fonction de signaux de commande fournis audit calculateur, **caractérisé en ce que** des consignes de freinage candidates validées par le procédé selon l'une quelconque des revendications précédentes sont implantées dans une base de données (6) du système de freinage.

7. Véhicule, **caractérisé en ce qu'**il comporte un système de freinage selon la revendication précédente.

## Patentansprüche

1. Verfahren zur Validierung oder Ablehnung (102) von potentiellen Bremsanweisungen während der Herstellung eines Bremssystems (112) für ein Fahrzeug, **dadurch gekennzeichnet, dass** es Folgendes umfasst:
Anwendung mindestens eines Algorithmus aus einem Analysealgorithmus (7), der eine Überprüfung von regulatorischen (20), technischen (21, 22) und/oder mit einem Fahrer verbundenen (23) Anforderungen umfasst, eines Testalgorithmus (8), der die Anwendung von potentiellen Anweisungen für Simulationen von Bremssituationen umfasst, und eines Expertensystem-Algorithmus (9), wobei das Expertensystem (26) einen Simulator (27) für Fahrzeugsensorsignale, ein Steuergerät (28) und einen Analysator (29) umfasst, wobei das Expertensystem (26) mit einem Bremssteuerungsmodell (30) und einem Modell (31) anderer Fahrzeugsysteme interagiert, wobei der Analysator (29) überprüft, ob die Bremsung zufriedenstellend ist, indem er die folgenden Schritte durchführt:
- Überprüfung (32) kritischer Situationen, die durch besondere Werte dargestellt werden, die von dem Sensorsignalsimulator (27) und dem Steuergerät (28) geliefert werden,
- Überprüfung (33) der von dem Modell der anderen Systeme (31) erkannten Probleme, wenn der Analysator (29) zu dem Schluss kommt, dass die Bremsung im vorherigen Schritt zufriedenstellend ist,
- Wiederholung (34) der Prüfschritte mit anderen Werten als den von dem Simulator (27) gelieferten Signalen,
- Validierung (35) einer potentiellen Anweisung, wenn alle Prüfungen erfolgreich sind, und andernfalls Ablehnung der potentiellen Anweisung (36).

2. Verfahren zur Validierung oder Ablehnung (102) von potentiellen Bremsanweisungen nach Anspruch 1, **dadurch gekennzeichnet, dass** der Schritt zur Überprüfung (33) von Problemen, die von dem Modell (31) der anderen Systeme erkannt werden, die Berücksichtigung eines Phänomens umfasst, das unter einer Überbremsung, die zu einer Überhitzung führt, oder einer Instabilität der Bahn ausgewählt ist.

3. Verfahren zur Validierung oder Ablehnung (102) von potentiellen Bremsanweisungen nach Anspruch 1 oder 2, **dadurch gekennzeichnet, dass** der Wiederholungsschritt (34) der Prüfschritte mit anderen Werten als den von dem Simulator (27) gelieferten Signalen durchgeführt wird, die zufällig ausgewählt werden.

4. Verfahren zur Validierung oder Ablehnung (102) von potentiellen Bremsanweisungen nach einem der Ansprüche 1 oder 2, **dadurch gekennzeichnet, dass** der Wiederholungsschritt (34) der Prüfschritte mit anderen Werten als den von dem Simulator (27) gelieferten Signalen durchgeführt wird, die in Abhängigkeit von Erkennungen potenzieller Probleme durch den Analysator (29) oder das Modell (31) anderer Fahrzeugsysteme ausgewählt werden.

5. Verfahren zur Validierung oder Ablehnung (102) von potentiellen Bremsanweisungen nach einem der Ansprüche 1 bis 4, **dadurch gekennzeichnet, dass** der Schritt zur Validierung oder Ablehnung (102) der potentiellen Bremsanweisungen ein Selbstlernen (14) umfasst, das Neubewertungen von zuvor validierten Anweisungen umfasst, wenn eine potentielle Anweisung abgelehnt wird, die als ähnlich zu den zuvor validierten Anweisungen erachtet wird.

6. Bremssystem, das einen mechanischen Teil (111) und einen Steuerteil (110) umfasst, wobei ein Steuergerät (109) in Echtzeit Bremsanweisungen an den mechanischen Teil in Abhängigkeit von Steuersignalen anwendet, die an das Steuergerät geliefert werden, **dadurch gekennzeichnet, dass** durch das Verfahren nach einem der vorhergehenden Ansprüche validierte potentielle Bremsanweisungen in einer Datenbank (6) des Bremssystems gespeichert sind.

7. Fahrzeug, **dadurch gekennzeichnet, dass** es ein Bremssystem nach dem vorhergehenden Anspruch umfasst.

## Claims

1. Method for validating or rejecting (102) potential braking instructions during the manufacture of a braking system (112) for a vehicle, **characterised in that** it comprises:
applying at least one algorithm from an analysis algorithm (7) comprising checking regulatory (20), technical (21, 22) and/or driver-associated (23) requirements, a test algorithm (8) comprising applying the potential instructions to simulations of braking situations and an expert system algorithm (9), the expert system (26) comprising a sensor signal simulator (27) of the vehicle, a calculator (28) and an analyser (29), the expert system (26) interacting with a brake control model (30) and a model (31) of other vehicle systems, wherein the analyser (29) checks that braking is satisfactory by carrying out the steps of:
- checking (32) critical situations represented by particular values provided by the sensor signal simulator (27) and the calculator (28),
- checking (33) problems detected by the model of the other systems (31) if the analyser (29) concludes that braking is satisfactory in the previous step,
- repeating (34) the checking steps with different values of the signals provided by the simulator (27),
- validating (35) a potential instruction if all the checks are conclusive and rejecting (36) the potential instruction otherwise.

2. Method for validating or rejecting (102) potential braking instructions according to claim 1, **characterised in that** the step of checking (33) problems detected by the model (31) of the other systems comprises taking into account a phenomenon chosen from excessive braking leading to overheating or trajectory instability.

3. Method for validating or rejecting (102) potential braking instructions according to claim 1 or 2, **characterised in that** the step (34) of repeating the checking steps is carried out with values different from the signals provided by the simulator (27), which are chosen randomly.

4. Method for validating or rejecting (102) potential braking instructions according to either claim 1 or 2, **characterised in that** the step (34) of repeating the checking steps is carried out with values different from the signals provided by the simulator (27), which are chosen according to detections of potential problems by the analyser (29) or the model (31) of other systems of the vehicle.

5. Method for validating or rejecting (102) potential braking instructions according to any one of claims 1 to 4, **characterised in that** the step of validating or rejecting (102) the potential braking instructions comprises self-learning (14) comprising re-evaluations of previously validated instructions, in the event of rejection of a potential instruction deemed similar to said previously validated instructions.

6. Braking system comprising a mechanical part (111) and a control part (110), wherein a calculator (109) applies braking instructions in real time to the mechanical part according to control signals provided to said calculator, **characterised in that** potential braking instructions validated by the method according to any one of the preceding claims are imported in a database (6) of the braking system.

7. Vehicle, **characterised in that** it comprises a braking system according to the preceding claim.
